# EUROPÄISCHE PATENTSCHRIFT

(11) **EP 1 335 254 B1**
(45) Veröffentlichungstag und Bekanntmachung des Hinweises auf die Patenterteilung: **17.08.2005**
(21) Anmeldenummer: 03007526.1
(22) Anmeldetag: 11.01.1997
(51) Int. Cl.: G05B 13/02

(54) **Verfahren zur Steuerung und/oder Regelung von Prozessgrössen einer Anlage**
Method for controlling and/or regulating of process variables of an installation
Procédé de commande et/ou régulation des grandeurs d'un processus d' une installation

(30) Priorität: 14.06.1996 CH 149396
(43) Veröffentlichungstag der Anmeldung: 13.08.2003
(62) Teilanmeldung aus: 97100384.3
(73) Patentinhaber: Siemens Building Technologies AG, 6300 Zug (CH)
(72) Erfinder: Coogan, Jim, 60016 Des Plaines, Illinois (US); Frutiger, Theo, 60089 Buffalo Grove, Illinois (US); Hegetschweiler, Walter, 6312 Steinhausen (CH); Renggli, Franz, 6033 Buchrain (CH)
(74) Vertreter: Berg, Peter, Dipl.-Ing.

(56) Entgegenhaltungen:
- EP-A- 0 525 258
- EP-A- 0 694 825
- US-A- 4 884 217
- US-A- 5 390 287
- J.SEAGLE ET AL: "ACQUIRING EXPERT RULES WITH THE AID OF DECISION TABLES" EUROPEAN JOURNAL OF OPERATIONAL RESEARCH (ELSEVIER), Bd. 84, 1995, Seiten 150-162, XP002263904

## Beschreibung

Die Erfindung bezieht sich auf ein Verfahren zur Steuerung und/oder Regelung von Prozessgrössen einer Anlage gemäss dem Oberbegriff des Anspruchs 1.

Ein solches Verfahren ist aus EP 0 694 825 bekannt.

Solche Verfahren eignen sich beispielsweise zur Steuerung und/oder Regelung von Prozessgrössen in komplexen technischen Systemen, wobei beispielhaft Heizungs-, Lüftungs- und Klimaanlagen, Zutritts- und Feuerüberwachungssysteme oder allgemein Gebäudeautomatisationsanlagen - die auch als Gebäudeleitsysteme bezeichnet werden - genannt seien, in welchen insbesondere auch Raumklimagrössen beeinflusst werden.

Es ist ein Verfahren dieser Art bekannt (US 5 400 246), bei der Werte von Ausgangskanälen durch ein Steuerprogramm generierbar sind, wobei dem Steuerprogramm Werte von Eingangskanälen verfügbar sind. Die Werte der Ausgangskanäle werden aufgrund von Bedingungen generiert. Eine Bedingung ist hier ein logischer Ausdruck mit wenigstens einem Wert eines Eingangskanals.

Aus US 4,884,217 ist ein Expertensystem bekannt, welches zum Auslegen von Steuerstrategien für mehrere unabhängige Steuer- oder Regelanwendungen benutzbar ist. Allgemein ist bei diesem System eine Steuerstrategie durch drei verschiedene hintereinandergeschaltete Klassen von Regeln bestimmt, welche über eine Bedienerschnittstelle in einer Programmiersprache zu formulieren sind.

Es ist allgemein bekannt (Derek J. Hatley et al: Strategies for Real-Time System Specification; NY 1988, Dorset House; Chapter 6.1, Combinational Machines), zur Beschreibung von Heizungs-, Lüftungs- und Klimaanlagen sogenannte Betriebsarten bzw. Zustände einzuführen, welche sich auf die Anlage als ganzes oder auf einen Anlagenteil beziehen. Mögliche Betriebsarten einer Heizungsanlage sind beispielsweise "REGELPROGRAMM-AUS", "REGELPROGRAMM-EIN", "SPAR-BETRIEB" und "FROST-SCHUTZ". Eine komplexe Anlage weist nun aber mehrere zeitlich nebeneinander arbeitender Teilsysteme auf, von denen jedes den geltenden Zustand der Anlage oder eines Anlagenteiles verändern kann. Beispiele für solche Teilsysteme sind etwa ein Heizungsregler, ein zeitabhängiges Schaltprogramm zum Ein- bzw. Ausschalten einer Heizeinrichtung, ein Not-Belüftungsprogramm, ein Programm zur Ausführung von Befehlen eines Anlagen-Operateurs oder ein Programm zur Begrenzung von Energie-Lastspitzen. Aufgrund des Zustandes eines Anlagenteiles werden selbsttätig Stellglieder wie beispielsweise Ventile oder Klappen betätigt oder es werden Parameter von weiteren Anlagenteilen, beispielsweise Parameter von Regelgeräten verändert.

Wenn nun aber die Teilsysteme den geltenden Zustand der Anlage oder den Zustand eines Teiles der Anlage unkoordiniert verändern, können Konfliktsituationen oder gar undefinierte Zustände auftreten. Die Koordination der Teilsysteme bedingt eine Vielzahl logischer Entscheidungen in den Programmen der Anlage, wobei auch Prioritäten zu beachten sind, da beispielsweise Notmassnahmen in einem Brandfall dringender zu behandeln sind als Massnahmen zur Minimierung von Lastspitzen beim Energieverbrauch.

Es sind auch Mittel bekannt (Landis & Gyr, PC-Software "Insight 4.xx", Beschreibung CM2N8522 D, November 1993), durch die ein Zustand eines Gebäudeleitsystems abrufbar und grafisch darstellbar ist. Aus bekannten Darstellungen ist jedoch nicht direkt ersichtlich, welche Ursachen den Zustand bewirken beziehungsweise welche Parameter den Zustand direkt beeinflussen.

Bei komplexen Anlagen ist es jedoch für das Service-Personal oft äusserst schwierig, wenn nicht sogar unmöglich, einen vorgesehenen Soll-Zustand der Anlage oder eines Anlagenteiles überhaupt ausfindig zu machen, da ein Algorithmus zur Bestimmung des Soll-Zustandes nicht einfach einsehbar ist.

Der Erfindung liegt die Aufgabe zugrunde, ein Verfahren anzugeben, mit denen ein Anlagenzustand konfliktfrei und für einen Anlagen-Operateur übersichtlich einsehbar koordinierbar ist.

Die genannte Aufgabe wird erfindungsgemäss durch die Merkmale der Ansprüche 1 und 9 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: ein Datenflussdiagramm eines Anlagenteiles mit zwei Entscheidungsstufen,
- Fig. 2: den prinzipiellen Aufbau einer Entscheidungstabelle,
- Fig. 3: Programmcode entsprechend der Wirkung der Entscheidungstabelle nach Fig. 2,
- Fig. 4: ein Diagramm zur Funktionsweise der Entscheidungstabelle nach der Fig. 2,
- Fig. 5: eine Entscheidungstabelle zur Auswahl eines Betriebszustandes,
- Fig. 6: Programmcode entsprechend der Wirkung der Entscheidungstabelle nach Fig. 5,
- Fig. 7: eine Entscheidungstabelle zur Ansteuerung von Anlagenteilen,
- Fig. 8: Programmcode entsprechend der Wirkung der Entscheidungstabelle nach Fig. 7,
- Fig. 9: ein Datenflussdiagramm mit der Entscheidungstabelle nach Fig. 5,
- Fig. 10: ein Datenflussdiagramm mit der Entscheidungstabelle nach Fig. 7,
- Fig. 11: ein Datenflussdiagramm einer Entscheidungsstufe,
- Fig. 12: ein Datenflussdiagramm mit zwei Entscheidungsstufen,
- Fig. 13: ein Datenflussdiagramm einer Anlage mit mehreren verketteten Entscheidungsstufen bzw. Entscheidungstabellen,
- Fig. 14: Klassen einer Entscheidungsstufe und deren Beziehungen,
- Fig. 15: eine Bediensicht (Window) für eine erste Entscheidungsstufe und
- Fig. 16: eine Bediensicht (Window) für eine zweite Entscheidungsstufe.

In der für die Zeichnung gewählten, aus der Literatur bekannten Darstellungsart für Datenflussdiagramme (dazu beispielsweise D. J. Hatley, I. A. Pirbhai: Strategies for Real-Time System Specification, Dorset House, NY 1988) bedeutet ein Kreis eine Aktivität, ein Viereck ein angrenzendes System und ein Pfeil einen Kanal zur Übertragung von Daten und/oder Ereignissen, wobei die Pfeilspitze in die wesentliche Datenflussrichtung zeigt. Ein Datenspeicher, der allgemein mehreren Aktivitäten zur Verfügung steht, ist durch zwei gleich lange, parallele Linien dargestellt. Mit dem Begriff Datenspeicher wird hier eine Einrichtung zur Speicherung von Daten bezeichnet, welche auch Mittel zur Verhinderung von Konflikten bei zeitlich parallelem Zugriff mehrerer Aktivitäten auf die Daten aufweist. Im weiteren ist beispielsweise eine Anordnung aus zwei durch einen Kanal verbundenen Aktivitäten mit einer einzigen Aktivität, welche alle Aufgaben der besagten beiden Aktivitäten erfüllt, äquivalent. Eine Aktivität ist allgemein in mehrere über Kanäle und/oder Datenspeicher verbundene Aktivitäten zerlegbar. Weitere in der Literatur der Datenflussdiagramme benutzte Bezeichnungen sind "Terminator" für das angrenzende System, "Process" oder "Task" für die Aktivität, "Data Flow" oder "Channel" für den Kanal und "Pool" oder "Data Pool" für den Datenspeicher.

Eine Aktivität kann als elektronische Schaltung oder auch softwaremässig als Prozess, Programmstück oder Routine verwirklicht werden, wobei die Aktivität bei einer softwaremässigen Ausführung auch die Zielhardware umfasst.

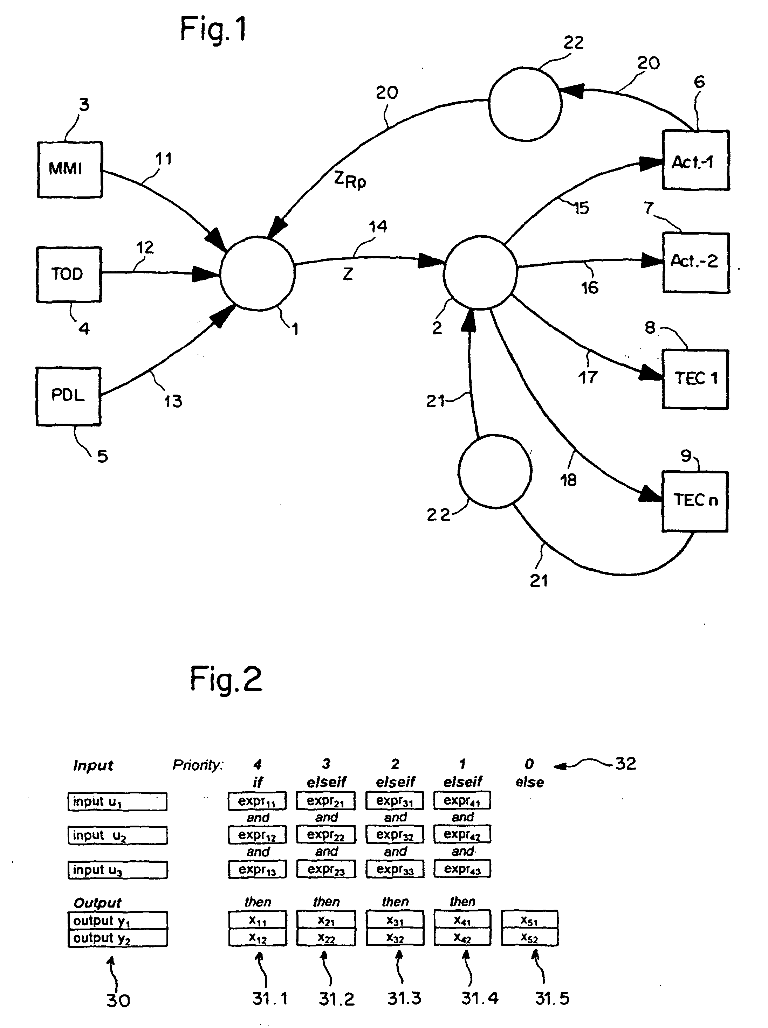

In der Fig. 1 bedeutet 1 eine erste Entscheidungsstufe und 2 eine zweite Entscheidungsstufe eines Anlagenteiles, welcher weiter ein erstes Teilsystem 3, ein zweites Teilsystem 4, ein drittes Teilsystem 5, ein viertes Teilsystem 6, ein fünftes Teilsystem 7, ein sechste Teilsystem 8 und ein siebtes Teilsystem 9 aufweist.

Der Begriff "Teilsystem" bedeutet hier ein mit der ersten Entscheidungsstufe 1 oder mit der zweiten Entscheidungsstufe 2 über einen Kanal gekoppeltes Programm oder auch eine mit der ersten Entscheidungsstufe 1 oder mit der zweiten Entscheidungsstufe 2 über einen Kanal gekoppelte Einrichtung innerhalb der Anlage. Zur Konkretisierung des Begriffes "Teilsystem" sei beispielhaft das erste Teilsystem 3 ein mit "Man-Machine-Interface MMI" bezeichnetes Programm zur Ausführung von Befehlen eines Anlagen-Operateurs, das zweite Teilsystem 4 ein mit "Time Of Day TOD" bezeichnetes vom Wochentag und der Tageszeit abhängiges Schaltprogramm zum Ein- und Ausschalten einer Heizgruppe, das dritte Teilsystem 5 ein mit "Peak-Demand-Limiting PDL" bezeichnetes Programm zur Minimierung von Lastspitzen bei der Energieaufnahme der Anlage, das vierte Teilsystem 6 ein mit "Act.-1" bezeichneter Antrieb einer Lüftungsklappe, das fünfte Teilsystem 7 ein mit "Act.-2" bezeichnetes Mischventil eines Heizkreises, und das sechste Teilsystem 8 wie auch das siebte Teilsystem 9 je ein Regelgerät, welches mit "TEC 1" bzw. mit "TEC n" bezeichnet ist.

Die erste Entscheidungsstufe 1 weist einen ersten mit dem ersten Teilsystem 3 verbundenen Eingangskanal 11, einen zweiten mit dem zweiten Teilsystem 4 verbundenen Eingangskanal 12 und einen dritten mit dem dritten Teilsystem 5 verbundenen Eingangskanal 13 auf. Die beiden Entscheidungsstufen 1 und 2 sind über einen Kanal 14 miteinander verbunden, wobei der Kanal 14 für die erste Entscheidungsstufe 1 funktional ein Ausgangskanal und für die zweite Entscheidungsstufe 2 funktional ein Eingangskanal ist.

Die zweite Entscheidungsstufe 2 weist einen ersten mit dem vierten Teilsystem 6 verbundenen Ausgangskanal 15, einen zweiten mit dem fünften Teilsystem 7 verbundenen Ausgangskanal 16, einen dritten mit dem sechsten Teilsystem 8 verbundenen Ausgangskanal 17 und einen vierten mit dem siebten Teilsystem 9 verbundenen Ausgangskanal 18 auf.

Bei Bedarf weisen die eingangsseitig mit der zweiten Entscheidungsstufe 2 verbundenen Teilsysteme 6, 7, 8 und 9 einen Kanal zur Rückführung eines Signals auf die erste Entscheidungsstufe 1 oder auf die zweite Entscheidungsstufe 2 auf. So ist ein Ausgang des vierten Teilsystems 6 beispielhaft über einen Rückführkanal 20 mit der ersten Entscheidungsstufe 1 verbunden und ein Ausgang des siebten Teilsystems 9 ist beispielhaft über einen weiteren Rückführkanal 21 mit der zweiten Entscheidungsstufe 2 verbunden. Damit ist der Rückführkanal 20 funktional auch ein weiterer Eingangskanal der ersten Entscheidungsstufe 1, während der weitere Rückführkanal 21 funktional auch ein weiterer Einganskanal der zweiten Entscheidungsstufe 2 ist.

Der Rückführkanäle 20 und 21 verfügen bei Bedarf über eine Verzögerungseinrichtung 22 zur zeitabhängigen Beeinflussung eines über den Rückführkanal 20 bzw. 21 geführten Signals.

Grundsätzlich sind die Anzahl der Eingangskanäle 11, 12, 13 und 20 der ersten Entscheidungsstufe 1 und die Anzahl der Ausgangskanäle 15, 16, 17 und 18 der zweiten Entscheidungsstufe 2 nicht begrenzt.

Die Teilsysteme 3, 4 und 5 übermitteln über den entsprechenden Eingangskanal 11 bzw. 12 bzw. 13 der ersten Entscheidungsstufe 1 je einen aus ihrer Sicht herrschenden Zustand Zp wonach die erste Entscheidungsstufe 1 aufgrund vorbestimmter Regeln einen geltenden Zustand Z ermittelt und der zweiten Entscheidungsstufe 2 über den Kanal 14 zur Verfügung stellt. Die erste Entscheidungsstufe 1 berücksichtigt bei der Ermittlung des geltenden Zustandes Z auch einen über den Rückführkanal 20 verfügbaren Zustand Z_{Rp} des vierten Teilsystems 6. Die zweite Entscheidungsstufe 2 ermittelt und veranlasst aufgrund des geltenden Zustandes Z notwendige Aktionen in den mit der zweiten Entscheidungsstufe 2 verbundenen Teilsystemen 6, 7, 8 und 9, wobei zur Veranlassung einer Aktion der entsprechende Ausgangskanal 15 bzw. 16 bzw. 17 bzw. 18 verwendet wird. Im allgemeinen bedient die zweite Entscheidungsstufe 2 abhängig vom geltenden Zustand Z mehrere Exemplare der ansteuerbaren Teilsysteme 6, 7, 8 und 9.

Mit Vorteil werden die beiden Entscheidungsstufen 1 und 2 je mit einer Entscheidungstabelle verwirklicht. Die Entscheidungstabelle ermöglicht eine klare und übersichtlich einsehbare Definition von Regeln, durch welche das Verhalten der Entscheidungsstufe 1 bzw. 2 bestimmt ist. Die Entscheidungstabelle ist zudem in einer Benutzerschnittstelle als Fenster eines Ausgabegerätes - beispielsweise als sogenanntes "Window" auf einem Bildschirm - darstellbar, wodurch die in der Entscheidungstabelle gespeicherte Information beispielsweise für einen Anlagen-Operateur vollständig und übersichtlich als Einheit in einer Bediensicht verfügbar ist.

Bei Bedarf benutzt die zweite Entscheidungsstufe 2 eingangsseitig weitere vom Zustand Z abhängige Information zur Verfolgung einer vom Zustand Z abhängigen Regelstrategie.

In der Fig. 2 bedeutet 30 eine Tabellenspalte zum Eintragen von Eingangskanälen und Ausgangskanälen der Entscheidungsstufe 1 bzw. 2 (Fig. 1), wobei in diesem allgemein gehaltenen Beispiel die Eingangskanäle mit "input u₁", "input u₂" und "input u₃" und die Ausgangskanäle mit "output y₁" und "output y₂" bezeichnet sind. Mit 31 sind weitere Tabellenspalten zum Eintragen von Regeln bezeichnet, wobei mit 31.1 eine erste Regel bzw. Tabellenspalte, mit 31.2 eine zweite Regel bzw. Tabellenspalte, mit 31.3 eine dritte Regel bzw. Tabellenspalte, mit 31.4 eine vierte Regel bzw. Tabellenspalte und mit 31.5 eine fünfte Regel bzw. Tabellenspalte bezeichnet sind. Eine Regel 31.r umfasst im allgemeinen wenigstens eine Aktion Xᵣₖ sowie mit Ausnahme der fünften (d. h. der letzten) Regel 31.5 einen Booleschen Ausdruck. Der Boolesche Ausdruck seinerseits umfasst wenigstens einen Teilausdruck exprᵣₖ. Mehrere Teilausdrücke der Regel 31.r sind miteinander verknüpft. Im Index der Aktion Xᵣₖ wie auch im Index des Teilausdruckes exprᵣₖ bezeichnet der Buchstabe r die zugehörige Regel während der Buchstabe k im Index des Teilausdruckes exprᵣₖ angibt, auf welchen Eingangskanal sich der Teilausdruck exprᵣₖ bezieht. Im Index der Aktion Xᵣₖ bezeichnet der Buchstabe k den Ausgangskanal, auf den die Aktion Xᵣₖ wirkt, wenn der hier durch logische UND Operation der Teilausdrücke exprᵣₖ gebildete Boolesche Ausdruck der Regel r wahr ist.

Der Teilausdruck exprᵣₖ ist ein Vergleich des aktuellen Wertes des Eingangskanals k mit einer weiteren Grösse des gleichen Datentyps, beispielsweise mit einer Konstante. Ein im Teilausdruck exprᵣₖ durchzuführender Vergleich wird vorteilhaft durch das dem Vergleich entsprechende bekanntes Symbol des Vergleichsoperators wie "=" für GLEICH, "<" für KLEINER, ">" für "GRÖSSER", "≤" für KLEINER ODER GLEICH oder "≥" für GRÖSSER ODER GLEICH dargestellt.

Lautet der Teilausdruck expr₁₂ beispielsweise "input u₂ = ON" und weisen alle Teilausdrücke exprᵣₖ der Entscheidungstabelle den gleichen Vergleichsoperator auf, dann wird in einer Bediensicht der Entscheidungstabelle die Übersichtlichkeit erhöht, indem in der Bediensicht lediglich die für einen Vergleich mit dem Eingangskanal "input u₂" vordefinierte Konstante "ON" dargestellt ist. Der Bezug der in der Bediensicht dargestellten Konstante "ON" zum Eingangskanal "input u₂ " ergibt sich durch eine gemeinsame Tabellenzeile; eine Darstellung des Vergleichoperators "=" kann wegfallen.

In vorteilhafter Art ist der Regel 31.1 bzw. 31.2 bzw. 31.3 bzw. 31.4 bzw. 31.5 eine Priorität fest zugeordnet, welche durch den Spaltenindex r definiert ist. So hat die erste Regel 31.1, also diejenige Regel mit dem tiefsten Spaltenindex r beispielhaft die höchste Priorität und die Regel 31.5, also diejenige Regel mit dem höchsten Spaltenindex r weist die niedrigste Priorität auf. Mit dem Zuordnungssinn der Prioritäten bezogen auf den Spaltenindex r der Regel 31.1 bzw. 31.2 bzw. 31.3 bzw. 31.4 bzw. 31.5 ist eine Wirkungsweise der Entscheidungstabelle festgelegt. Mit Vorteil ist die entsprechende Priorität der Regel 31.1 bzw. 31.2 bzw. 31.3 bzw. 31.4 bzw. 31.5 in einer Kopfzeile 32 der Entscheidungstabelle eingetragen.

Es versteht sich von selbst, dass die Entscheidungstabelle auch in einer Darstellungsvariante einsetzbar ist, in der die Regel 31.1 bzw. 31.2 bzw. 31.3 bzw. 31.4 bzw. 31.5 horizontal bzw. zeilenweise statt wie in der Zeichnung vertikal bzw. spaltenweise dargestellt ist.

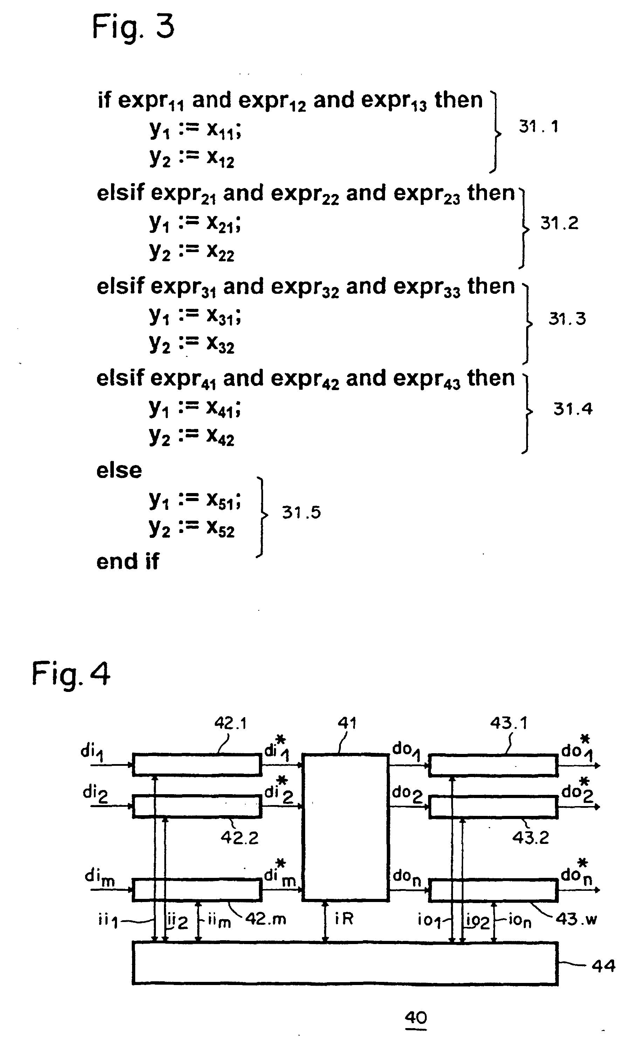

Die Wirkungsweise der in der Fig. 2 dargestellten Entscheidungstabelle ist in der Fig. 3 in linearer Notation gemäss der der Programmiersprache Pascal ähnlichen Programmiersprache PORTAL (Arnold Businger: PORTAL Language Description, Lecture Notes in Computer Science 198, Springer Verlag Berlin Heidelberg NY Tokyo 1985) dargestellt.

Die Teilausdrücke expr₁₁ bis expr₄₃ sind Boolesche Datentypen, weisen also entweder den Wert "TRUE" oder den Wert "FALSE" auf. Als erstes wird die erste Regel 31.1 geprüft, wobei dazu ein aus der logischen UND-Verknüpfung der Teilausdrücke expr₁₁ und expr₁₂ und expr₁₃ gebildeter Ausdruck ausgewertet wird. Nur wenn der besagte Ausdruck den Wert "TRUE" aufweist, werden die Aktionen der ersten Regel 31.1 durchgeführt, das heisst, nur dann wird am ersten Ausgangskanal y₁ der Wert X₁₁ und am zweiten Ausgangskanal y₂ der Wert x₁₂ generiert, andernfalls, also wenn der besagte Ausdruck den Wert "FALSE" aufweist, wird die zweite Regel 31.2 geprüft.

Wie bei geschachtelten bedingten Anweisungen der Programmiersprache Pascal werden gemäss der natürlichen Reihenfolge - das heisst gemäss der in Fig. 2 dargestellten Entscheidungstabelle von links nach rechts - solange Regeln 31.1 bzw. 31.2 bzw. 31.3 bzw. 31.4 geprüft, bis erstmals der Ausdruck einer Regel den Wert "TRUE" aufweist, wonach die betreffenden Aktionen der Regel ausgeführt werden. Sofern der Ausdruck bei keiner der Regeln 31.1 bzw. 31.2 bzw. 31.3 bzw. 31.4 zutrifft, werden die Aktionen der letzten Regel in der Entscheidungstabelle, hier also die Aktionen der fünften Regel 31.5 ausgeführt. In der linearen Notation nach Fig. 3 kommt klar zum Ausdruck, dass den Regeln 31.1, 31.2, 31.3, 31.4 und 31.5 aufgrund der Spalten-Position in der Entscheidungstabelle (Fig. 2) eine Priorität fest zugeordnet ist, wobei also die Regel 31.1 mit höchster Priorität, das heisst zuerst ausgewertet wird.

Mit Vorteil ist ein Exemplar der Entscheidungstabelle über eine interaktive Benutzerschnittstelle konfigurierbar, wobei die Anzahl der Eingangskanäle, die Anzahl der Ausgangskanäle und die Anzahl der Regeln grundsätzlich nicht beschränkt sind. Mit Vorteil werden auch physikalische Adressen der Eingangskanäle wie auch physikalische Adressen der Ausgangskanäle über die Benutzerschnittstelle zugeordnet und in der Entscheidungstabelle bezogen auf den entsprechenden Eingangs- bzw. Ausgangskanal abgespeichert.

In der Fig. 4 ist das Prinzip einer vorteilhaften Ausführungsform 40 der Entscheidungstabelle zur Entscheidungsstufe 1 bzw. 2 (Fig. 1) anhand eines Blockdiagramms dargestellt, in dem wesentliche Datenflüsse eingetragen sind. Eine Einheit 41 umfasst Regeln, durch welche Wirkungen von Eingangskanälen 42.1 bis 42.m auf Ausgangskanäle 43.1 bis 43.n festgelegt sind. Der Entscheidungstabelle ist eine Benutzerschnittstelle 44 zugeordnet, über welche die Regeln der Einheit 41 eingegeben und die Eingangskanäle 42.1 bis 42.m und die Ausgangskanäle 43.1 bis 43.n konfiguriert werden. Die Benutzerschnittstelle 44 umfasst in vorteilhafter Art Mittel zur sichtbaren Darstellung der Regeln, der aktuellen Daten der Eingangskanäle 42.1 bis 42.m und der aktuellen Daten der Ausgangskanäle 43.1 bis 43.n in Tabellenform, wie auch Eingabemittel zum Eingeben bzw. Verändern der Regeln und der aktuellen Daten der Eingangskanäle 42.1 bis 42.m bzw. der Ausgangskanäle 43.1 bis 43.n.

Die Eingangskanäle 42.1 bis 42.m sind eingangsseitig durch von zugeordneten Teilsystemen generierte Eingangsdatenflüsse di₁ bis diₘ gespeist. Ausgangsseitig stellen die Eingangskanäle 42.1 bis 42.m die bei Bedarf veränderten Eingangsdatenflüsse di₁ bis diₘ als Eingangsdatenflüsse di*₁ bis di*ₘ der Einheit 41 zur Verfügung. Die Eingangsdatenflüsse di*₁ bis di*ₘ werden nach den Regeln der Einheit 41 in Ausgangsdatenflüsse do₁ bis doₙ der Ausgangskanäle 43.1 bis 43.n transformiert. Die Ausgangskanäle 43.1 bis 43.n übertragen die bei Bedarf veränderten Ausgangsdatenflüsse do₁ bis doₙ als Ausgangsdatenflüsse do*₁ bis do*ₙ an zugeordnete Teilsysteme.

Die Benutzerschnittstelle 44 ist mit den Eingangskanälen 42.1 bis 42.m über Interface-Datenflüsse ii₁ bis iiₘ und mit den Ausgangskanälen 43.1 bis 43.n über weitere Interface-Datenflüsse io₁ bis ioₙ verbunden. Zudem ist die Benutzerschnittstelle 44 über einen zusätzlichen Interface-Datenfluss iR mit der Einheit 41 verbunden. Durch die Interface-Datenflüsse iR, ii₁ bis iiₘ und io₁ bis ioₙ wird einerseits die Entscheidungstabelle entsprechend den Vorgaben eines Benutzers konfigurierbar, anderseits werden die aktuellen Daten der Entscheidungstabelle durch die Benutzerschnittstelle 44 darstellbar. Vorteilhafterweise sind auch die Regeln der Einheit 41 über die Benutzerschnittstelle veränderbar.

Mit Vorteil sind die aktuellen Daten der Eingangskanäle 42.1 bis 42.m und der Ausgangskanälen 43.1 bis 43.n durch die Benutzerschnittstelle 44 über die Interface-Datenflüsse ii₁ bis iiₘ und io₁ bis ioₙ beispielsweise zu Testzwecken veränderbar.

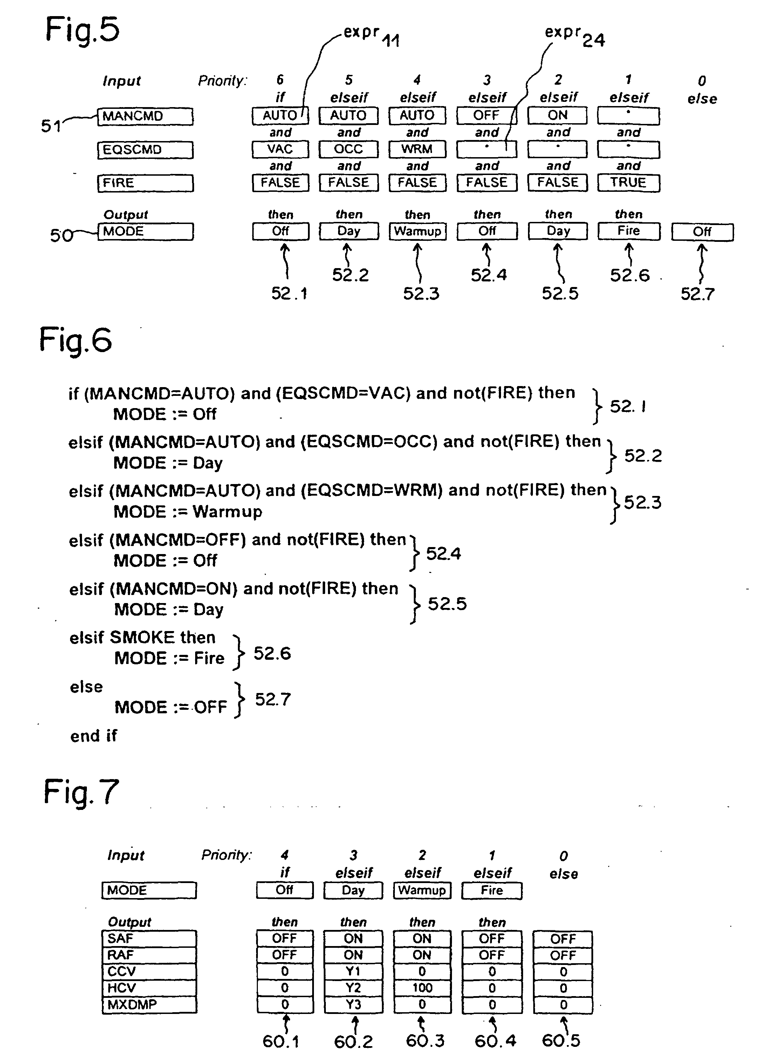

Die Fig. 5 zeigt beispielhaft eine Entscheidungstabelle zur Selektion eines hier mit "MODE" bezeichneten Betriebszustandes aufgrund von Zustandswerten von mit "MANCMD", "EQSCMD" oder "FIRE" bezeichneten Eingangskanälen. Die Entscheidungstabelle zur Selektion des Betriebszustandes ist eine praktische Ausführungsform des Prinzips der ersten Entscheidungsstufe 1 (Fig. 1) und hat damit typischerweise nur einen einzigen Ausgangskanal "MODE", jedoch mehrere Eingangskanäle.

Bei Bedarf ist der Datentyp einer zu einem bestimmten Zeitpunkt über den Ausgangskanal "MODE" verfügbaren Dateneinheit 50 jedoch ein strukturierter Datentyp, beispielsweise im Sinne der Programmiersprache C++ eine sogenannte Struktur "struct {}" oder im Sinne der Programmiersprache Pascal ein sogenannter "Record" oder eine sogenannte Variante. So wird mit dem aktuellen Betriebszustand einer Heizungsanlage beispielhaft auch ein Sollwert für eine Raumtemperatur generiert und der Betriebszustand und der Sollwert zusammen als Struktur durch den einzigen Ausgangskanal "MODE" zur Verfügung gestellt.

Die Darstellung von Teilausdrücken der Regeln sind hier auf skalare Konstanten reduziert, so dass sich ein vollständiger Teilausdruck über einen Vergleich mit dem als Variable wirksamen Eingangskanal ergibt. Als Beispiel sei dazu der erste Boolesche Teilausdruck expr₁₁ der ersten Regel angegeben, der vollständigerweise ein Vergleich "MANCMD=AUTO" ist, wobei mit "MANCMD" der Eingangskanal bezeichnet ist, was gleichbedeutend mit dem Namen einer Kanalvariablen 51 ist.

Die Entscheidungstabelle nach der Fig. 5 weist sieben Regeln 52.1 bis 52.7 bzw. Tabellenspalten 52.1 bis 52.7 auf, wobei eine Regel 52.r nach der mit Fig. 2 beschriebenen Art in der Tabellenspalte 52.r dargestellt ist.

Mit höchster Priorität wird eine in einer Tabellenspalte 52.1 dargestellte Regel bearbeitet, indem die logische UND-Verknüpfung der Booleschen Teilausdrücke der Regel, hier also "MANCMD=AUTO" UND "EQSCMD=VAC" UND "FIRE=FALSE" ausgewertet wird. Wenn die logische UND-Verknüpfung der Booleschen Teilausdrücke den Wert "TRUE" ergibt, wird dem Ausgangskanal "MODE" der Wert "Off" zugewiesen, andernfalls wird die Regel mit der nächst tieferen Priorität bearbeitet.

Eine mit dem Zeichen "*" bezeichnete Konstante eines Teilausdruckes expr₂₄ bedeutet hier, dass der Boolesche Teilausdruck "EQSCMD=*" für alle Werte des Eingangskanals "EQSCMD" den Wert "TRUE" ergibt.

In der Fig. 6 ist die Wirkungsweise der in der Fig. 5 dargestellten Entscheidungstabelle in der linearen Notation der Programmiersprache PORTAL dargestellt, wobei je eine Tabellenspalte 52.r bzw. Regel 52.r einer geschachtelten "IF-THEN"-Anweisung entspricht.

Dadurch, dass über die Benutzerschnittstelle 44 (Fig. 4) in der Entscheidungstabelle für Eingangskanäle und Ausgangskanäle sowie für Konstanten ein Name grundsätzlich frei wählbar und darstellbar ist, ist die Entscheidungstabelle ein wesentliches Mittel für eine transparente und sichere Führung beispielsweise eines Anlagenoperateurs. Die Entscheidungstabelle der ersten Entscheidungsstufe 1 ermöglicht eine übersichtliche und einheitliche Darstellung der für die Auswahl des Betriebszustandes benutzten Regeln. Die mit den Eingangskanälen 11, 12 und 13 verbundenen Teilsysteme 3, 4, bzw. 5 dürfen unterschiedliche Zustandsräume aufweisen; auch wenn die besagten Teilsysteme 3, 4, bzw. 5 unterschiedliche Mengen von Zuständen aufweisen und wenn die Zustände der Teilsysteme 3, 4, bzw. 5 jeweils unterschiedlich benannt werden, ermöglicht die Entscheidungstabelle ein klare und übersichtliche Darstellung der Entscheidungsgrundlagen der Entscheidungsstufe 1 anhand der in Tabellenspalten 52 dargestellten Regeln.

Die Fig. 7 zeigt beispielhaft eine Entscheidungstabelle zur Ansteuerung von Anlagenteilen oder Teilsystemen abhängig von einem hier mit "MODE" bezeichneten Eingangskanal.

Die Entscheidungstabelle zur Ansteuerung von Teilsystemen ist eine praktische Ausführungsform des Prinzips der zweiten Entscheidungsstufe 2 (Fig. 1) und hat damit typischerweise nur einen einzigen hier mit "MODE" bezeichneten Eingangskanal, jedoch mehrere Ausgangskanäle, welche hier mit "SAF", "RAF", "CCV", "HCV" und "MXDMP" bezeichnet sind.

Die Entscheidungstabelle nach der Fig. 7 weist fünf Regeln 60.1 bis 60.5 bzw. Tabellenspalten 60.1 bis 60.5 auf, wobei eine Regel 60.r nach der mit Fig. 2 beschriebenen Art in der Tabellenspalte 60.r dargestellt ist.

Mit höchster Priorität wird eine in einer Tabellenspalte 60.1 dargestellte Regel bearbeitet, indem der Boolesche Ausdruck der Regel, hier also "MODE=Off" ausgewertet wird. Wenn der Boolesche Ausdruck den Wert "TRUE" ergibt, werden dem Ausgangskanal "SAF" und dem Ausgangskanal "RAF" je der Wert "Off" und weiter dem Ausgangskanal "CCV" und dem Ausgangskanal "HCV" sowie dem Ausgangskanal "MXDMP" je der Wert null zugewiesen, andernfalls wird die Regel mit der nächst tieferen Priorität bearbeitet.

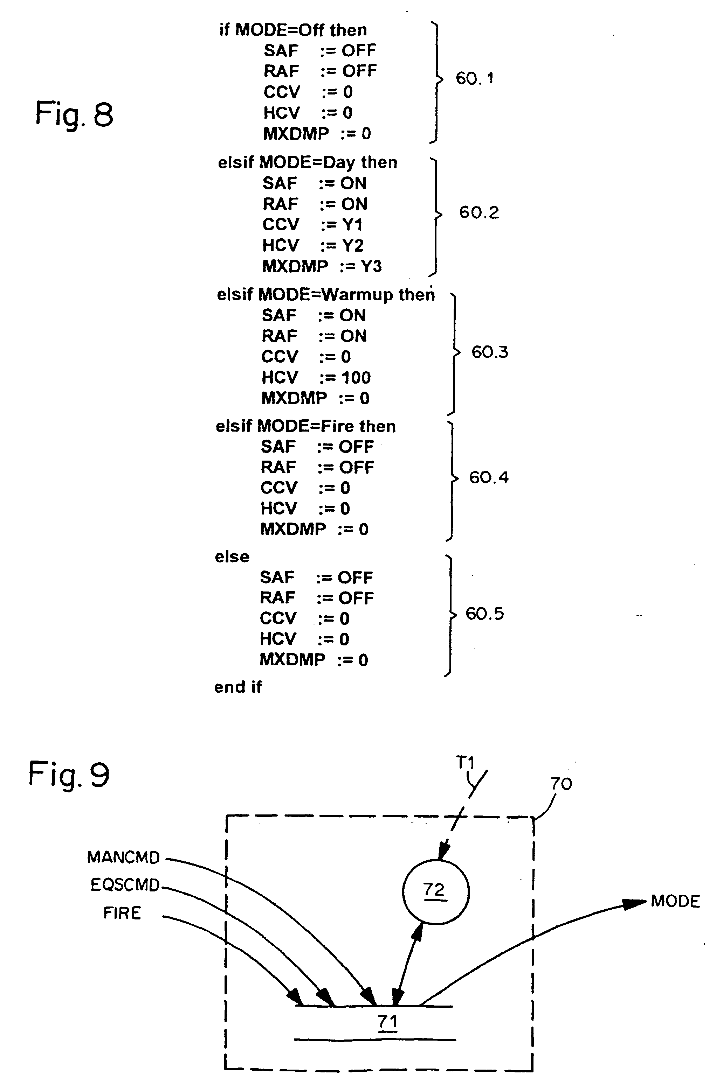

In der Fig. 8 ist die Wirkungsweise der in der Fig. 7 dargestellten Entscheidungstabelle in der linearen Notation der Programmiersprache PORTAL dargestellt, wobei je eine Tabellenspalte 60.r bzw. Regel 60.r einer geschachtelten "IF-THEN"-Anweisung entspricht.

In der Fig. 9 bezeichnet 70 die Entscheidungstabelle zur Selektion des hier mit "MODE" bezeichneten Betriebszustandes aufgrund von Zustandswerten der mit "MANCMD", "EQSCMD" oder "FIRE" bezeichneten Eingangskanäle. Die Entscheidungstabelle 70 verfügt über einen Datenspeicher 71 zur Speicherung der zugehörigen Regeln und zur Speicherung von aktuellen Werten der Eingangskanäle "MANCMD", "EQSCMD" und "FIRE" und des Ausgangskanals "MODE". Der Entscheidungstabelle 70 ist ein Prozess 72 zugeordnet, der aufgrund der Regeln aus den aktuellen Werten der Eingangskanäle "MANCMD", "EQSCMD" und "FIRE" den Zustandswert des Ausgangskanals "MODE" berechnet. Vorteilhafterweise wird der Prozess 72 durch ein Triggersignal T1 gestartet, welches beispielsweise durch ein Regelgerät generiert wird. In einer ersten Variante des Prozesses 72 wird das Triggersignal T1 selbsttätig, beispielsweise periodisch, ausgelöst. In einer zweiten Variante des Prozesses 72 wird das Triggersignal T1 durch eine gewisse Änderung eines Wertes eines der Eingangskanäle "MANCMD", "EQSCMD" oder "FIRE" ausgelöst.

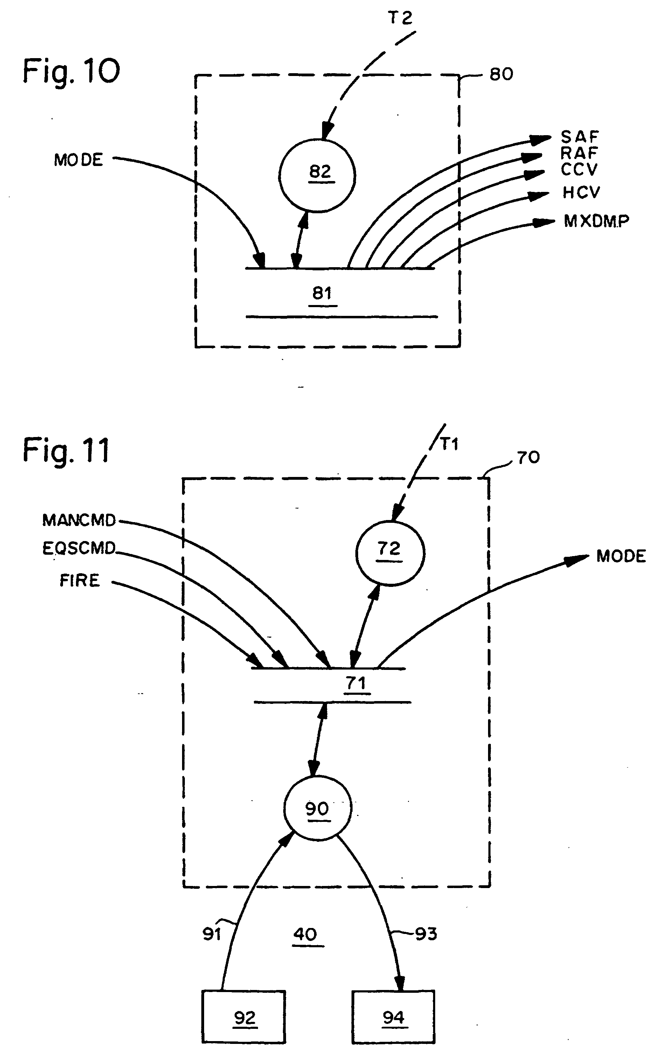

In der Fig. 10 bezeichnet 80 die Entscheidungstabelle zur Ansteuerung von Anlagenteilen oder Teilsystemen abhängig von einem hier mit "MODE" bezeichneten Eingangskanal. Die Entscheidungstabelle 80 verfügt über einen Datenspeicher 81 zur Speicherung der zugehörigen Regeln und zur Speicherung von aktuellen Werten des Eingangskanals "MODE" und der hier mit "SAF", "RAF", "CCV", "HCV" oder "MXDMP" bezeichneten Ausgangskanäle. Der Entscheidungstabelle 80 ist ein Prozess 82 zugeordnet, der aufgrund der Regeln aus dem aktuellen Zustandswert des Eingangskanals "MODE" die entsprechenden Werte der Ausgangskanäle "SAF", "RAF", "CCV", "HCV" und "MXDMP" berechnet. Vorteilhafterweise wird der Prozess 82 durch ein Triggersignal T2 gestartet, welches beispielsweise durch ein Regelgerät generiert wird. In einer ersten Variante des Prozesses 82 wird das Triggersignal T2 selbsttätig, beispielsweise periodisch, ausgelöst. In einer zweiten Variante des Prozesses 82 wird das Triggersignal T2 durch eine Änderung des Wertes des Eingangskanals "MODE" ausgelöst.

Die Benutzerschnittstelle 44 (Fig. 4) der Entscheidungstabelle 70 zur Selektion des hier mit "MODE" bezeichneten Betriebszustandes weist mit Vorteil einen in der Fig. 11 mit 90 bezeichneten Eingabe-/Ausgabe-Prozess auf. Der Eingabe-/Ausgabe-Prozess 90 ist über einen Eingabekanal 91 mit einem Eingabeeinrichtung 92 und über einen Ausgabekanal 93 mit einem Ausgabeeinrichtung 94 verbunden. Die Ausgabeeinrichtung 94 ist beispielsweise ein Bildschirm, auf dem eine grafische Bediensicht der Entscheidungstabelle 70 sowie weitere Bilder und Daten eines Gebäudeleitsystems darstellbar sind. Über die Eingabeeinrichtung 92 werden Daten zur Konfigurierung und Änderung der Entscheidungstabelle 70 eingegeben. Mit Vorteil ermöglicht die Eingabeeinrichtung 92 Aufrufe zur Darstellung verschiedenster Bediensichten des Gebäudeleitsystems, welches auch die Entscheidungstabelle 70 umfasst. Die Eingabeeinrichtung 92 ist beispielsweise eine Kombination mit einer Tastatur und einer Maus oder einem anderen mit einer optische Markierung - einem sogenannten Cursor - der Ausgabeeinrichtung 94 koppelbaren Eingabegerät.

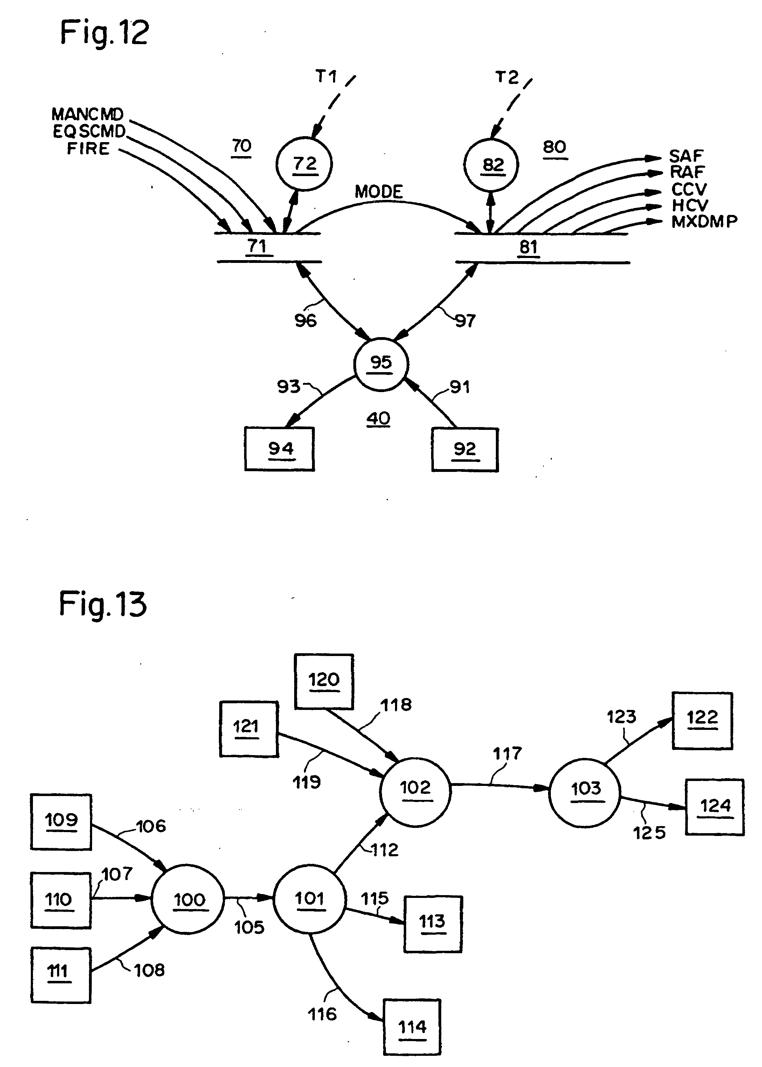

In der Fig. 12 ist eine Variante 95 des Eingabe-/Ausgabe-Prozesses 90 (Fig. 11) über einen ersten Datenkanal 96 mit dem Datenspeicher 71 der der Selektion des Betriebszustandes dienenden ersten Entscheidungstabelle 70 und über einen zweiten Datenkanal 97 mit dem Datenspeicher 81 der der Ansteuerung von Anlagenteilen oder Teilsystemen dienenden zweiten Entscheidungstabelle 80 verbunden. Die beiden Entscheidungstabellen sind miteinander gekoppelt, indem der mit "MODE" bezeichnete Ausgangskanal der ersten Entscheidungstabelle 70 bzw. der ersten Entscheidungsstufe 1 (Fig.1) mit dem ebenfalls mit "MODE" bezeichnete Eingangskanal der zweiten Entscheidungstabelle 80 verbunden ist.

Der hohe Grad der erreichbaren Übersichtlichkeit und die damit verbundene Zuverlässigkeit der mittels der Entscheidungstabelle verwirklichten Entscheidungsstufe 1 bzw. 2 wird in einem grösseren System, beispielsweise in einem Gebäudeleitsystem besonders vorteilhaft nutzbar, indem weitere durch gleichartige Entscheidungstabellen verwirklichte Entscheidungsstufen auf einfache Art verkettet werden, wobei jeweils ein Ausgangskanal einer Entscheidungsstufe mit einem Eingangskanal einer weiteren Entscheidungsstufe verbunden wird. Auf diese Art ist im ganzen System neben einer hohen Zuverlässigkeit auch eine hohe Bedienerfreundlichkeit erreichbar.

Eine Verkettung von Entscheidungstabellen wirkt sich insbesondere dadurch vorteilhaft aus, indem schwierig analysierbare Entscheidungsprozesse mit mehreren Eingangsgrössen und mehreren Ausgangsgrössen in einen relativ einfach kontrollierbaren Auswahlprozess und einen dem Auswahlprozess nachgeschalteten einfach kontrollierbaren Verteilprozess aufteilbar sind, wobei grundsätzlich mehrere je einen Auswahlprozess und einen Verteilprozess umfassende Kombinationen hintereinander schaltbar sind und wobei die Auswahlprozesse wie auch die Verteilprozesse mit Vorteil durch Entscheidungstabellen verwirklicht sind.

In der Fig. 13 ist mit 100 ein erster Auswahlprozess, mit 101 ein erster Verteilprozess, mit 102 ein zweiter Auswahlprozess und mit 103 ein zweiter Verteilprozess bezeichnet. Der erste Auswahlprozess 100 generiert ein erstes Zustandssignal 105 abhängig von Signalen 106, 107 und 108, welche von Anlagenteilen 109, 110 und 111 dem ersten Auswahlprozess 100 zugeleitet werden. Aufgrund des dem ersten Verteilprozess 101 zugeleiteten ersten Zustandssignals 105 werden im ersten Verteilprozess 101 ein dem zweiten Auswahlprozess zugeführtes Signal 112 sowie einem Anlagenteil 113 bzw. 114 zugeführtes Signal 115 bzw. 116 generiert. Der zweite Auswahlprozess 102 generiert ein zweites Zustandssignal 117 abhängig von dem vom ersten Verteilprozess 101 generierten Signal 112 sowie abhängig von den Signalen 118 und 119, welche von weiteren Anlagenteilen 120 bzw. 121 dem zweiten Auswahlprozess 102 zugeleitet werden. Schliesslich generiert der zweite Verteilprozess 103 ein einem Anlagenteil 122 zugeführtes Signal 123 und ein weiteres einem Anlagenteil 124 zugeführtes Signal 125.

Die Entscheidungstabellen der Entscheidungsstufen 1 und 2 und die Entscheidungstabellen der Auswahl - und der Verteilprozesse 100, 101, 102 und 103 sind besonders vorteilhaft durch objektorientierte Programmsysteme verwirklicht und werden beispielsweise mit Hilfe der Programmiersprache C++ (Bjarne Stroustroup: Die C++ Programmiersprache, Addison-Wesley, 1985) oder mit einer anderen objektorientierten Programmiersprache geschrieben und mit einem entsprechenden Werkzeug in bekannter Art erzeugt.

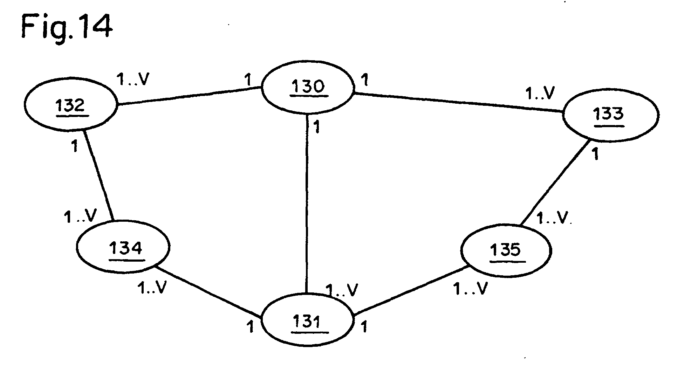

In der Fig. 14 weist eine vorteilhafte objektorientierte Implementierung der Entscheidungsstufe 1 bzw. 2 (Fig. 1) eine Klasse 130 für Entscheidungstabellen, eine Klasse 131 für Regeln 31.1 bis 31.5 (Fig. 2), eine Klasse 132 für Eingangskanäle 11, 12 und 13 (Fig. 1), eine Klasse 133 für Ausgangskanäle 14, 15, 16, 17 und 18, eine Klasse 134 für Teilausdrücke exprᵣₖ (Fig. 2) bzw. Bedingungen und eine Klasse 135 für Aktionen Xᵣₖ (Fig. 2) auf.

Beziehungen zwischen jeweils zwei Klassen sind nach der aus Entity-Relationship Diagrammen bekannten Art durch eine Linie dargestellt. Ein Ausdruck "1..V" bedeutet dabei eine Mehrfachbeziehung zwischen Instanzen zweier Klassen, wobei jedoch wenigstens eine Beziehung besteht und die Anzahl der Beziehungen grundsätzlich nicht beschränkt ist.

Eine Instanz der Klasse 130 für Entscheidungstabellen ist also wenigstens mit einer Instanz der Klasse 132 für Eingangskanäle und weiter mit wenigstens einer Instanz der Klasse 133 für Ausgangskanäle sowie mit wenigstens einer Instanz der Klasse 131 für Regeln verknüpft. Eine Instanz der Klasse 131 für Regeln ist wenigstens mit einer Instanz der Klasse 134 für Teilausdrücke exprᵣₖ bzw. Bedingungen und mit wenigstens einer Instanz der Klasse 135 für Aktionen verknüpft. Weiter ist eine Instanz der Klasse 134 für Teilausdrücke exprᵣₖ bzw. Bedingungen genau mit einer Instanz der Klasse 132 für Eingangskanäle verknüpft, während eine Instanz der Klasse 135 für Aktionen genau mit einer Instanz der Klasse 133 für Ausgangskanäle verknüpft ist.

Dadurch dass die Entscheidungsstufe 1 oder 2 (Fig. 1) bzw. der Auswahl - oder der Verteilprozesse 100, 101, 102 oder 103 (Fig. 13) durch eine gemäss der Fig. 2 in vorteilhafter Art aufgebauten Entscheidungstabelle verwirklicht wird, sind mit wenig Aufwand unterschiedliche Bediensichten der Entscheidungsstufe 1 bzw. 2 bzw. der Auswahl - oder der Verteilprozesse 100, 101, 102 oder 103 programmierbar, die genau auf die Bedürfnisse einer gewissen Benutzerkategorie abgestimmt sind.

Im allgemeinen sind mehrere verschiedene Benutzerkategorien vorgesehen, die mit Vorteil unterschiedliche Zugriffsrechte auf die Entscheidungstabellen besitzen und denen in einer vordefinierten Bediensicht die für ihre Bedürfnisse notwendigen Daten verfügbar sind. Mit Vorteil weist eine Bediensicht jedoch immer eine Tabellenform auf. Es versteht sich von selbst, dass Bediensichten der Entscheidungstabelle mit wenig Aufwand auf die Sprache der Benutzerkategorie anpassbar sind, für welche die Bediensichten vorgesehen sind.

In eine Bediensicht für Engineering-Aufgaben werden mit Vorteil alle Regeln 31.1 bis 31.5 dargestellt, während in einer Bediensicht für allgemeine Überwachungsaufgaben mit Vorteil nur eine einzige Regel dargestellt wird, nämlich die im Betrachtungszeitpunkt zutreffende Regel 31.r, deren Teilausdrücke exprᵣₖ im Betrachtungszeitpunkt alle wahr sind.

Eine Bediensicht der vorteilhaft implementierten Entscheidungsstufe 1 bzw. 2 ist vor allem dann mit wenig Aufwand programmierbar, wenn zur Implementierung der Benutzerschnittstelle ein Betriebssystem verwendet wird, welches - wie beispielsweise das System "Windows NT" - eine Darstellung sogenannter "Windows" beziehungsweise Bildschirmfenster unterstützt.

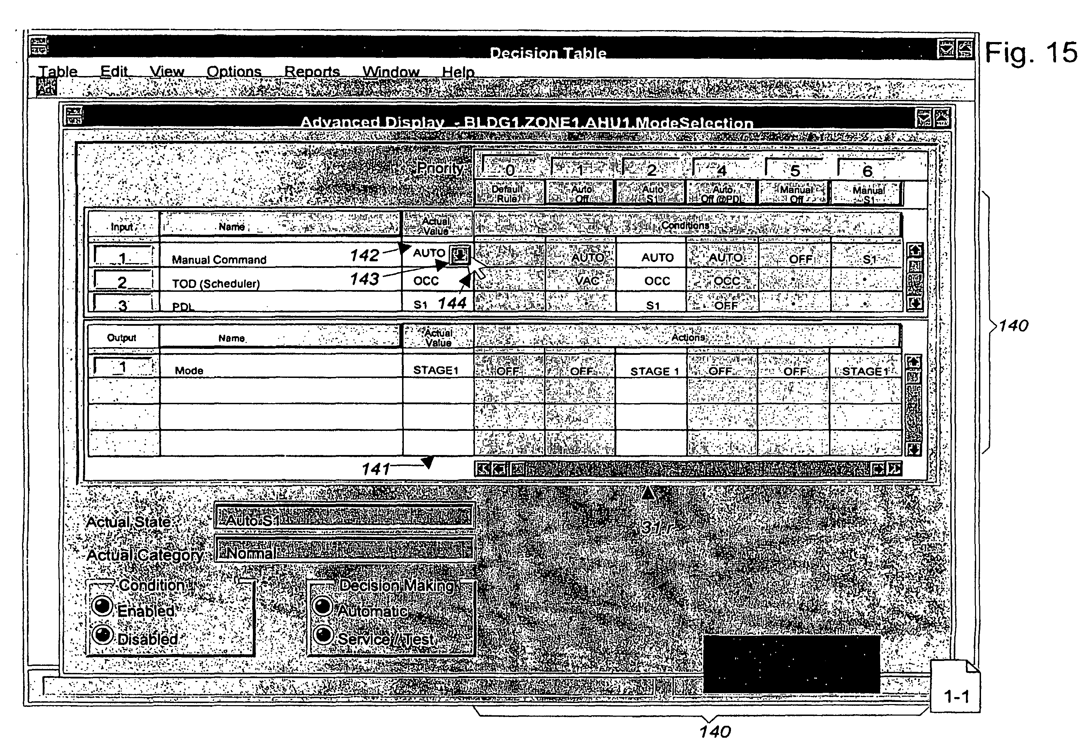

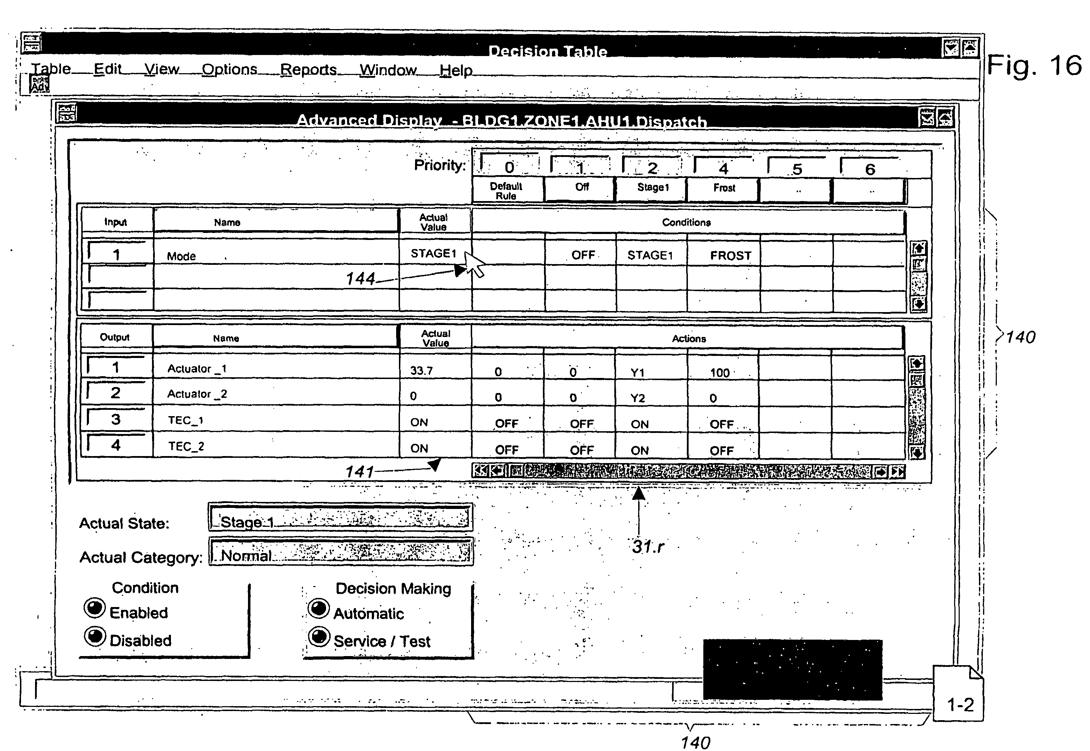

In der Fig. 15 und in der Fig. 16 ist mit 140 ein Fensterfeld mit den Bedingungen und Aktionen aufweisenden Regeln der Entscheidungstabelle der ersten Entscheidungsstufe1 bzw. der zweiten Entscheidungsstufe 2 bezeichnet. Im Fensterfeld 140 ist mit Vorteil die aktuell zutreffende Regel 31.r optisch gekennzeichnet. In einer Spalte 141 sind die aktuellen Werte der Eingangskanäle und der Ausgangskanäle dargestellt.

Die optische Kennzeichnung der aktuell zutreffenden Regel 31.r erfolgt beispielsweise mittels Farbton der betreffenden Spalte des Fensterfeldes 140, in der die aktuell zutreffenden Regel 31.r dargestellt ist.

Nach der in der Fig.15 gezeigten Darstellung ist offensichtlich folgender Boolescher Ausdruck wahr:
("Manual Command" = "AUTO") UND ("TOD" = "OCC") UND ("PDL" = "S1"),
wodurch die Aktion "Mode" := "STAGE 1" ausgeführt wird.

Ein aktueller Wert "AUTO" eines Feldes 142 (Fig. 15), welches zur Darstellung des aktuellen Wert eines Eingangskanals 11 (Fig. 1) vorgesehen ist, kann auf vorteilhafte Art - beispielsweise zu Testzwecken - durch ein Mittel 143 zum Ändern eines Tabelleneintrages verändert werden. Das Mittel 143 zum Ändern eines Tabelleneintrages ist beispielsweise über eine mit einer Maus gekoppelte Lichtmarke 144 anwählbar und mit Vorteil grundsätzlich überall da angeordnet, wo in der Bediensicht eine Änderung erlaubt ist.

Ein vorteilhaftes Verfahren zur Steuerung und/oder Regelung von Prozessgrössen einer Anlage mit wenigstens vier Teilsystemen 3, 4, 5, 6, 7, 8 oder 9 (Fig. 1), wovon wenigstens zwei Teilsysteme 3, 4 oder 5 je einen durch ein Signal des Teilsystems darstellbaren Zustand aufweisen und wovon wenigstens zwei weitere Teilsysteme 6, 7, 8 oder 9 je einen Zustand aufweisen, der über ein dem betreffenden Teilsystem zuführbares Signal veränderbar ist, weist mit Vorteil wenigstens folgende drei Verfahrensschritte auf:
Einen ersten Verfahrensschritt, in dem durch Auswerten von Regeln einer ersten der Entscheidungsstufe 1 zugeordneten Entscheidungstabelle aufgrund des Zustandes eines ersten Teilsystems 3 oder aufgrund des Zustandes eines zweiten Teilsystems 4 bzw. 5 ein weiterer Zustandswert Z ermittelt wird.

Einen zweiten Verfahrensschritt, in dem der im ersten Verfahrensschritt ermittelte Zustandswert Z einem Eingang 14 einer zweiten der Entscheidungsstufe 2 zugeordneten Entscheidungstabelle zugeführt wird.

Schliesslich einen dritten Verfahrensschritt, in dem durch Auswerten von Regeln der zweiten Entscheidungstabelle der Zustand eines dritten Teilsystems 6 bzw. 7 oder der Zustand eines vierten Teilsystems 8 bzw. 9 verändert wird.

Durch das vorteilhafte Verfahren ist ein durch Zustände der Teilsysteme 3, 4, 5 gegebener Zustand der Anlage konfliktfrei koordinierbar, wobei die zur Koordinierung angewandten Regeln in Bediensichten der den Entscheidungsstufen 1 bzw. 2 zugeordneten Entscheidungstabellen für einen Anlagen-Operateur übersichtlich einsehbar sind.

## Patentansprüche

1. Verfahren zur Steuerung und/oder Regelung von Prozessgrössen einer Anlage mit wenigstens vier Teilsystemen (3; 4; 7; 8), wovon wenigstens zwei Teilsysteme (3; 4) je einen durch ein Signal (11; 12) des Teilsystems (3; 4) darstellbaren Zustand aufweisen und wovon wenigstens zwei weitere Teilsysteme (7; 8) je einen Zustand aufweisen der über ein dem betreffenden Teilsystem zuführbares Signal (16; 17) veränderbar ist,
**gekennzeichnet durch**
Einsetzen von Regeln (31) aufweisenden Entscheidungstabellen (1; 2 bzw. 70; 80), wobei in einer Entscheidungstabelle einer Regel (31.r) eine vorbestimmte Priorität zugeordnet ist, welche in der Entscheidungstabelle (1; 2) einmalig ist,
einen ersten Verfahrensschritt, in dem **durch** Auswerten von Regeln einer ersten Entscheidungstabelle (1; 70) aufgrund des Zustandes eines ersten Teilsystems (3) oder aufgrund des Zustandes eines zweiten Teilsystems (4) ein weiterer Zustandswert (Z) ermittelt wird, wobei die Regeln der ersten Entscheidungstabelle (1) in einer Bediensicht graphisch darstellbar sind,
einen zweiten Verfahrensschritt, in dem der im ersten Verfahrensschritt ermittelte Zustandswert (Z) einem Eingang (14) einer zweiten Entscheidungstabelle (2) zugeführt wird, und
einen dritten Verfahrensschritt, in dem **durch** Auswerten von Regeln der zweiten Entscheidungstabelle (2) der Zustand eines dritten Teilsystems (7) oder der Zustand eines vierten Teilsystems (8) verändert wird, wobei die Regeln der zweiten Entscheidungstabelle (2) in einer Bediensicht graphisch darstellbar sind.

2. Verfahren nach Anspruch 1, **dadurch gekennzeichnet,**
**dass** in der Entscheidungstabelle (1; 2) die Regeln (31) gemäss der zugeordneten Prioritäten ausgewertet werden und die die höchste Priorität aufweisende Regel (31.1) zuerst ausgewertet wird.

3. Verfahren nach einem vorangehenden Anspruch, **dadurch gekennzeichnet,**
**dass** die Priorität der Regel durch die Position der Regel (31.r) in der Entscheidungstabelle (1; 2) festgelegt ist.

4. Verfahren nach Anspruch 2, **dadurch gekennzeichnet,**
**dass** eine Regel (31.r) eine Bedingung (exprᵣₖ) und eine Aktion (Xᵣₖ) umfasst, und die Aktion (Xᵣₖ) nur dann ausgeführt wird, wenn die Bedingung (exprᵣₖ) der Regel (31.r) erfüllt ist.

5. Verfahren nach Anspruch 4, **dadurch gekennzeichnet,**
**dass** in der Bedingung (exprᵣₖ) ein Wert (diₖ) eines Eingangskanals mit einem weiteren Wert verglichen wird,
und wenigstens ein Wert (doₖ) eines Ausgangskanals durch die ausgeführte Aktion (Xᵣₖ) verändert wird.

6. Verfahren nach einem vorangehenden Anspruch,
**dadurch gekennzeichnet,**
**dass** die Entscheidungstabelle (70; 80) durch Mittel (44; 90, 92, 94) zur Eingabe und Veränderung von Daten generiert und/oder verändert wird.

7. Verfahren nach einem vorangehenden Anspruch,
**dadurch gekennzeichnet**
**dass** ein Wert (71; 81) der Entscheidungstabelle (70; 80) durch Mittel (44; 90, 92, 94) zur Eingabe und Veränderung von Daten verändert wird.

8. Verfahren nach einem vorangehenden Anspruch
**dadurch gekennzeichnet**
**dass** zwei miteinander verknüpfte Exemplare (70; 80) der Entscheidungstabelle (70; 80) gleichzeitig in einer einzigen Bediensicht dargestellt werden.

## Claims

1. Method for controlling and/or regulating process variables in an installation having at least four subsystems (3; 4; 7; 8), at least two subsystems (3; 4) of which have a respective state which can be represented by a signal (11; 12) from the subsystem (3; 4), and at least two further subsystems (7; 8) of which have a respective state which can be altered using a signal (16; 17) which can be supplied to the subsystem in question,
**characterized by**
the use of decision tables (1; 2 or 70; 80) containing rules (31), where a decision table contains, for a rule (31.r), an associated predetermined priority which is unique in the decision table (1; 2),
a first method step, in which rules in a first decision table (1; 70) are evaluated on the basis of the state of a first subsystem (3) or on the basis of the state of a second subsystem (4) to ascertain a further state value (Z), with the rules in the first decision table (1) being able to be graphically displayed in a control view,
a second method step, in which the state value (Z) ascertained in the first method step is supplied to an input (14) of a second decision table (2), and
a third method step, in which rules in the second decision table (2) are evaluated to alter the state of a third subsystem (7) or the state of a fourth subsystem (8), with the rules in the second decision table (2) being able to be graphically displayed in a control view.

2. Method according to Claim 1, **characterized**
**in that** the rules (31) are evaluated in the decision table (1; 2) on the basis of the associated priorities, and the rule (31.1) which has the highest priority is evaluated first.

3. Method according to either of the preceding claims, **characterized**
**in that** the priority of the rule is stipulated by the position of the rule (31.r) in the decision table (1; 2).

4. Method according to Claim 2, **characterized**
**in that** a rule (31.r) comprises a condition (exprᵣₖ) and an action (Xᵣₖ), and the action (Xᵣₖ) is performed only if the condition (exprᵣₖ) in the rule (31.r) is met.

5. Method according to Claim 4, **characterized**
**in that** the condition (exprᵣₖ) involves a value (diₖ) from an input channel being compared with a further value,
and at least one value (doₖ) from an output channel is altered by the performed action (Xᵣₖ).

6. Method according to one of the preceding claims, **characterized**
**in that** the decision table (70; 80) is generated and/or altered by means (44; 90, 92, 94) for inputting and altering data.

7. Method according to one of the preceding claims, **characterized**
**in that** a value (71; 81) from the decision table (70; 80) is altered by means (44; 90, 92, 94) for inputting and altering data.

8. Method according to one of the preceding claims, **characterized**
**in that** two interlinked instances (70; 80) of the decision table (70; 80) are displayed simultaneously in a single control view.

## Revendications

1. Procédé de commande et/ou de régulation de grandeurs de processus d'une installation comprenant au moins quatre sous-systèmes (3; 4; 7; 8) dont au moins deux sous-systèmes (3 ; 4) présentent chacun un état apte à être représenté par un signal (11 ; 12) du sous-système (3 ; 4) et dont au moins deux autres sous-systèmes (7 ; 8) présentent chacun un état apte à être modifié au moyen d'un signal (16 ; 17) pouvant être amené au sous-système concerné,
**caractérisé par**
l'utilisation de tables de décision (1 ; 2 resp. 70 ; 80) comportant des règles (31), dans une table de décision une priorité prédéterminée étant attribuée à une règle (31.r), priorité qui est unique dans la table de décision (1 ; 2),
une première étape du procédé, dans laquelle, en évaluant des règles d'une première table de décision (1 ; 70) sur la base de l'état d'un premier sous-système (3) ou sur la base de l'état d'un deuxième sous-système (4), une autre valeur d'état (Z) est déterminée, les règles de la première table de décision (1) pouvant être représentées graphiquement dans une fenêtre de commande,
une deuxième étape du procédé, dans laquelle la valeur d'état (Z) déterminée dans la première étape du procédé est amenée à une entrée (14) d'une deuxième table de décision (2), et
une troisième étape du procédé, dans laquelle, en évaluant des règles de la deuxième table de décision (2), l'état d'un troisième sous-système (7) ou l'état d'un quatrième sous-système (8) est modifié, les règles de la deuxième table de décision (2) pouvant être représentées graphiquement dans une fenêtre de commande.

2. Procédé selon la revendication 1, **caractérisé en ce que**
dans la table de décision (1 ; 2), les règles (31) sont évaluées selon les priorités attribuées et **en ce que** la règle (31.1) présentant la plus haute priorité est évaluée en premier.

3. Procédé selon une revendication précédente, **caractérisé en ce que**
la priorité de la règle est définie par la position de la règle (31.r) dans la table de décision (1 ; 2).

4. Procédé selon la revendication 2, **caractérisé en ce que**
une règle (31.r) comporte une condition (exprᵣₖ) et une action (Xᵣₖ) et **en ce que** l'action (Xᵣₖ) n'est exécutée que si la condition (exprᵣₖ) de la règle (31.r) est remplie.

5. Procédé selon la revendication 4, **caractérisé en ce que**
dans la condition (exprᵣₖ), une valeur (diₖ) d'un canal d'entrée est comparée avec une autre valeur,
et **en ce qu'**au moins une valeur (doₖ) d'un canal de sortie est modifiée par l'action (Xᵣₖ) exécutée.

6. Procédé selon une revendication précédente, **caractérisé en ce que**
la table de décision (70 ; 80) est générée et/ou modifiée par des moyens (44 ; 90, 92, 94) d'entrée et de modification de données.

7. Procédé selon une revendication précédente, **caractérisé en ce que**
une valeur (71 : 81) de la table de décision (70 ; 80) est modifiée par des moyens (44 ; 90, 92, 94) d'entrée et de modification de données.

8. Procédé selon une revendication précédente, **caractérisé en ce que**
deux exemplaires (70 ; 80), liés entre eux, de la table de décision (70 ; 80) sont représentés simultanément dans une seule fenêtre de commande.
